# EUROPEAN PATENT APPLICATION

(11) **EP 4 488 511 A1**
(43) Date of publication of application: **08.01.2025**
(21) Application number: 23382680.9
(22) Date of filing: 01.07.2023
(51) Int. Cl.: F03D 13/10, F03D 80/50, F03D 80/80

(54) **METHODS FOR EXTRACTING TRANSFORMERS OF A NACELLE OF A WIND TURBINE**

(71) Applicant: General Electric Renovables España S.L., 08005 Barcelona (ES)
(72) Inventor: DIGARD BROU DE CUISSART, Sebastien, 44200 Nantes (FR); RAGUENES, Loïc, 2100 Copenhagen (DK); RUSSELL, Michael Edwin, Derby (GB); BEAUFAY, Charly, 44200 Nantes (FR)
(74) Representative: Bardehle Pagenberg S.L.

(57) **Abstract**

The present disclosure relates to methods for extracting transformers from nacelles of wind turbines. The methods comprise moving a cart along a guide system, wherein the cart carries the transformer, and wherein the guide system comprises a first guide part arranged inside the nacelle, and a second guide part extending through an opening in the nacelle and beyond a first end of the nacelle. The method further comprises moving the transformer along the second guide part to position the transformer outside of the nacelle. Nacelles and wind turbines suitable for such methods are also disclosed.

## Description

### FIELD

The present disclosure relates to methods for extracting electrical components of a nacelle of a wind turbine, more particularly to methods for extracting transformers from a wind turbine nacelle.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly ("directly driven" or "gearless") or through the use of a gearbox. This way, the generator produces electricity which can be supplied to the electrical grid.

Wind turbines have evolved rapidly over the last decades with a clear trend of increasing size. The power generated by a wind turbine is proportional to the rotor swept area and, therefore to the square of the blade length. Thus, higher towers and longer blades have been used with the goal of extracting more energy from the wind, leading to a higher electricity production. The increase in size over the years has led to a substantial increase in the loads acting on wind turbine components, and has posed new challenges for a wide range of disciplines including mechanical, electrical, materials and civil engineering among others.

The electricity produced by the wind turbine generator is regulated via different electrical components which include e.g. a transformer and a power converter. The turbine transformer steps up the voltage amplitude of the electrical power and the regulated electrical power is then supplied to the electrical grid.

These electrical components have generally been placed in the base of the wind turbine tower. However, it is becoming a common practice to place them in the nacelle of the wind turbine.

Transformers and converters are relatively large and heavy e.g. they can weigh about 10 - 11 tones. When one of these components e.g. a transformer is damaged, a lot of time and effort have to be invested in their replacement. Replacing such heavy components poses a challenge, especially when they are placed in the nacelle of the wind turbine, which is located high above the ground.

For transformers located in the nacelle, it is known to extract the transformers from the top of the nacelle with the use of hoisting equipment. In such cases, hoisting lines from a crane are connected to the transformer, which is then lifted and extracted through an opening in the top of the nacelle. During the extraction, the lifting movement can cause oscillation of the transformer, which can lead to the transformer potentially damaging elements in the nacelle e.g. by hitting them. Accordingly, this method is very sensitive and time consuming.

It is also known to extract transformers through the bottom of the nacelle e.g. through a hatch. These methods require the use of specific cranes which have to be located within the nacelle.

The present disclosure provides methods and devices to at least partially overcome some of the aforementioned drawbacks.

### SUMMARY

In an aspect of the present disclosure, a method for extracting a transformer from a nacelle of a wind turbine is provided. The method comprises moving a cart along a guide system, wherein the cart carries the transformer, and wherein the guide system comprises a first guide part arranged inside the nacelle, and a second guide part extending through an opening in the nacelle and beyond a first end of the nacelle. The method further comprises moving the transformer along the second guide part to position the transformer outside of the nacelle.

According to this aspect, the extraction of a transformer from a nacelle of a wind turbine may be simplified. The transformer may be extracted without the use of complex or heavy tools. The time of extraction may also be significantly reduced. In addition, during the extraction process, the transformer may always be under controlled movement, eliminating or reducing the risk of damage to components inside the nacelle due to oscillations of the transformer.

In another aspect of the present disclosure, a nacelle of a wind turbine is provided. The nacelle comprises a transformer. The nacelle further comprises a guide system configured to guide a cart. The guide system comprises a first guide part which is arranged inside of the nacelle and a second guide part, wherein the second guide part is configured to extend beyond a first end of the nacelle through an opening, and wherein the cart is configured to carry the transformer.

In a further aspect, a wind turbine is provided. The wind turbine comprises a tower, a nacelle and one or more blades rotatably supported to the nacelle via a hub. The nacelle comprises a transformer. The nacelle further comprises a guide system configured to guide a cart. The guide system comprises a first guide part which is arranged inside of the nacelle and a second guide part, wherein the second guide part is configured to extend beyond a first end of the nacelle through an opening, and wherein the cart is configured to carry the transformer.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 shows a flowchart of an example of a method for extracting a transformer from a nacelle of a wind turbine.
Figure 4 schematically illustrates an example of a nacelle according to the present disclosure;
Figure 5 schematically illustrates an example of a part of a guide system according to the present disclosure;
Figure 6 schematically illustrates an example of a nacelle according to the present disclosure;
Figure 7 shows a flowchart of an example of a method for introducing a transformer into a nacelle of a wind turbine.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

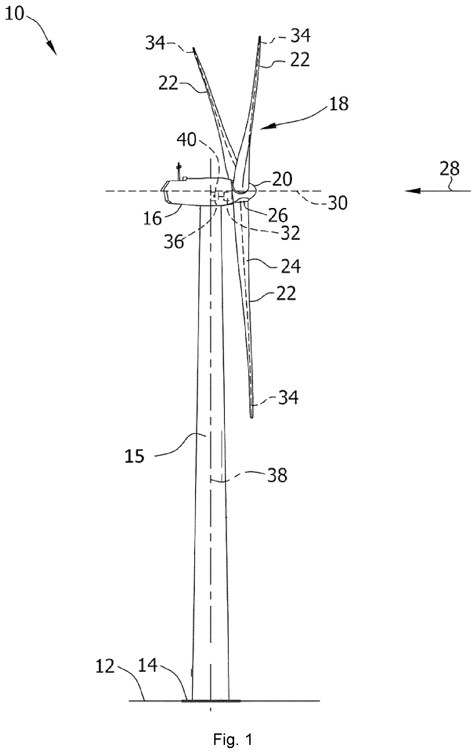

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

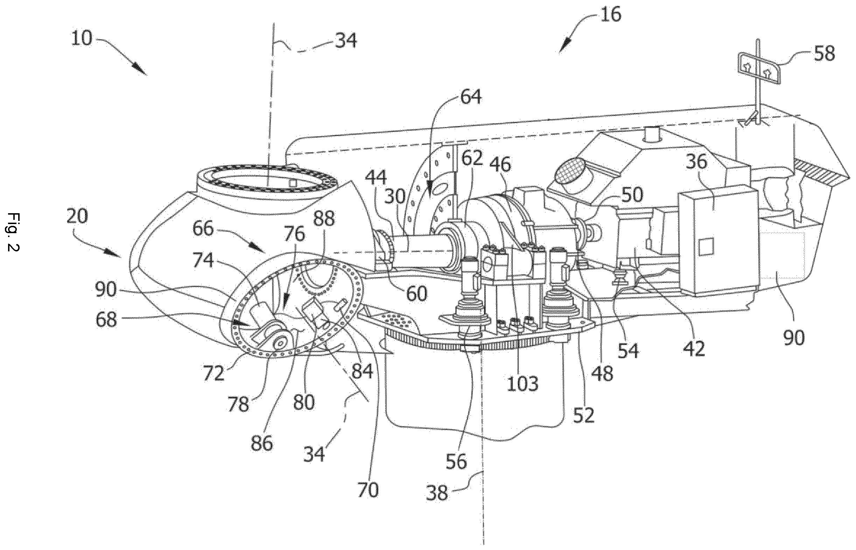

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage, e.g. 10 - 35 KV. Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, main frame 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

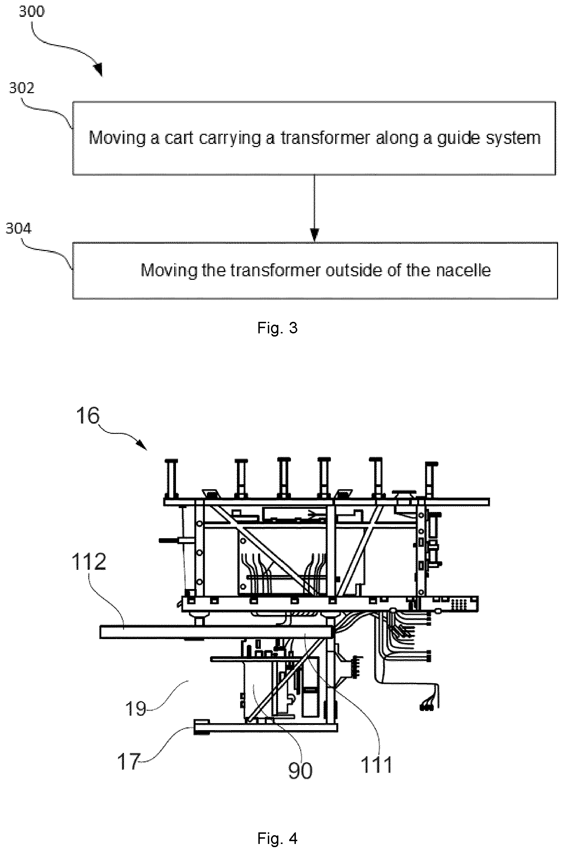

In an aspect of the invention, a method 300 for extracting a transformer from a nacelle of a wind turbine is disclosed. Figure 3 shows a flow chart of the method 300.

The method 300 comprises, at step 302, moving a cart along a guide system, wherein the cart carries the transformer, and wherein the guide system comprises a first guide part arranged inside the nacelle, and a second guide part extending through an opening in the nacelle and beyond a first end of the nacelle. The method further comprises at step 304 moving the transformer along the second guide part to position the transformer outside of the nacelle.

The method may provide a way of extracting a transformer from a nacelle without the need of using complex and heavy tools. The extraction of the transformer may be relatively fast and may be simplified.

Various embodiments of the method for extracting a transformer from a nacelle of a wind turbine are schematically illustrated in figures 4-6.

Figure 4 schematically represents an example of a nacelle 16 of a wind turbine comprising a transformer 90 and a guide system 100. The guide system 100 is configured to guide a cart. The guide system 100 comprises a first guide part 111 which is arranged inside of the nacelle 16 and a second guide part 112. The second guide part 112 of the guide system is configured to extend beyond a first end 17 of the nacelle through an opening 19, and the cart is configured to carry the transformer 90.

Throughout the present disclosure, a cart may be regarded as any sort of transporting element which may be suitable for carrying a transformer and for being displaced along a guide e.g. through wheels or rollers, or by sliding on skates or pads.

The method may comprise opening or removing a cover to form the opening 19 at the first end 17 of the nacelle. The nacelle may comprise a first end 17 comprising a cover which may be open and/or removed.

As shown in figure 4, the first end 17 of the nacelle may comprise the rear end of the nacelle. Depending on the location of the transformer in the nacelle, and the distribution of other elements within the nacelle, the opening 19 may be positioned at a certain location in the outer walls of the nacelle. In other examples, the first end 17 of the nacelle may comprise one of the lateral ends of the nacelle.

The opening 19 may be big enough such that a transformer 90, the cart and the guide system 100 fit through it. The cover may be opened or removed manually or automatically.

The method may further comprise connecting the transformer 90 to the cart 130 before moving the cart 130 along the guide system 100.

As shown in figure 4, the transformer 90 may be moved along the guide system 100 by suspending the transformer 90 from a cart. In addition, the cart may move the transformer 90 through the opening 19 from a first position to a second position. In some examples, the first position may be a position in an inner part of the nacelle and the second position may be a position outside of the nacelle. In other examples, the transformer may be moved from outside the nacelle to an inner part of the nacelle.

In some examples, the method may comprise moving elements within the nacelle out of a trajectory of the transformer 90 within the nacelle. Elements within the nacelle 16 which are located between the opening 19 and the transformer 90 may be moved prior to moving the cart carrying the transformer. These elements may be moved within the nacelle 16 out of a trajectory of the transformer 90. The trajectory may be regarded as the moving path that the transformer 90 may follow when it is being moved along the guide system 100.

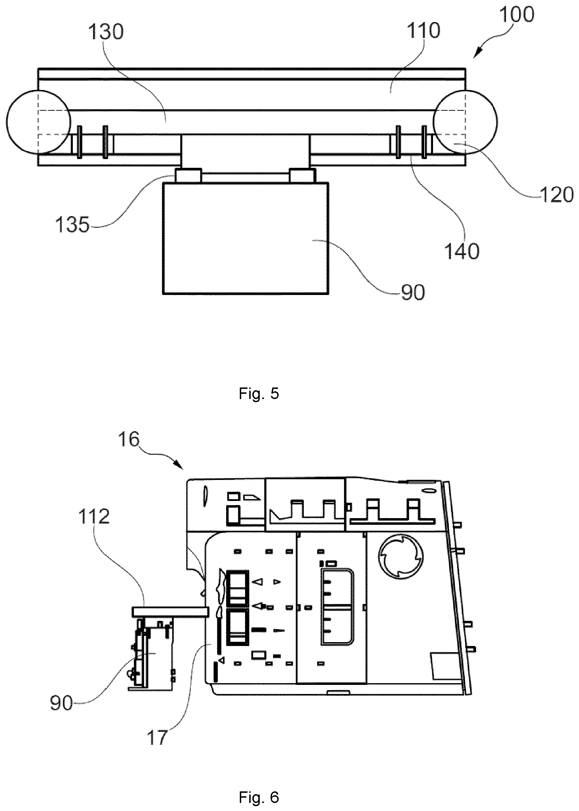

An example of a part of a guide system 100 configured to guide a cart 130 for carrying a transformer 90 is shown in figure 5.

As schematically shown in figure 5, the guide system 100 may comprise a longitudinal rail 110, and the cart 130 may comprise one or more rollers or sliding pads 120 configured to move along the longitudinal rail 110.

In some examples, the longitudinal rail 110 may comprise a beam e.g. an I beam. The longitudinal rail 110 may be substantially straight and may be substantially parallel to a floor of the nacelle. The longitudinal rail 110 may be configured to withstand the weight of a transformer 90. The longitudinal rail 110 may be made of steel.

The cart 130 may be configured to be displaced along the longitudinal rail 110 and may be configured to carry the transformer 90. In the example shown in figure 5, the cart is guided along the longitudinal rail 110 with two rollers. The cart 130 may be moved along the longitudinal rail 110 e.g. with an electric motor.

Further, the guide system 100 may comprise fixation or locking elements 140 connected to the cart 130. The fixation elements 140 may have an open or "unlocked" configuration and a closed or "locked" configuration. In an open configuration, the fixation elements 140 may allow movement of the cart 130 along the longitudinal rail 110. In a closed configuration, the fixation elements 140 may connect to the longitudinal rail 110 in addition to the cart 130, thereby preventing the cart 130 from moving along the longitudinal rail 110. The fixation elements 140 may ensure that the cart 130 is only moved along the longitudinal rail 110 when desired.

In some examples, during normal operation of a wind turbine, the transformer 90 may be suspended from the cart 130. In some examples, both ends of the cart 130 may be resiliently connected to the guide system 100, e.g. the longitudinal rail 110, to form a tuned mass damper (not shown). The use of additional mass dampers may be avoided and the total weight of the nacelle may be reduced by using the transformer for damping.

In other examples, the transformer 90 may be lifted off a floor of the nacelle before extracting it from the nacelle. In some examples, the guide system 100 may comprise a hoist (not shown) which may be configured to connect with the transformer 90. The transformer 90 may be lifted off a floor of the nacelle with the hoist e.g. one or more chain hoists and may be connected to the cart 130. In some examples, the hoist may be part of the cart 130.

In some examples, the transformer 90 may be connected to the cart 130 via one or more silent blocks 135. The silent blocks 135 may be made from a flexible or elastomeric material and may be configured to absorb vibrations, damping any energy which may be transmitted through the silent blocks. As shown in figure 5, the transformer 90 may be connected to the cart 130 via two silent blocks 135.

Referring back to figure 4, the longitudinal rail of the guide system 100 may comprise a first guide part 111 and a second guide part 112.

The first guide part 111 of the longitudinal rail may be arranged inside of the nacelle 16. In the nacelle, the first guide part 111 of the longitudinal rail may be located above a transformer 90, allowing a connection between the transformer 90 and the cart 130 configured to be displaced along the guide system.

Installing the first guide part 111 of the longitudinal rail inside of the nacelle may allow to permanently have part of the guide system ready to be used, simplifying the process of moving the transformer.

In some examples, the first guide part 111 of the longitudinal rail may be attached to an inner wall of the nacelle. In other examples, the first guide part 111 of the longitudinal rail may be attached to a wall parallel to a floor of the nacelle and defining a ceiling above the transformer 90. The first guide part 111 of the longitudinal rail may extend towards the first end 17 of the nacelle i.e. towards the opening 19.

As shown in figure 4, the second guide part 112 of the guide system extends beyond the first end 17 of the nacelle through the opening 19 such that the transformer 90 may be moved from inside of the nacelle to outside of the nacelle i.e., in this example, the nacelle is moved from the first guide part 111 of the guide system, to the second guide part 112 of the guide system. In other examples, when installing or re-installing a transformer, the transformer 90 may be moved from the second guide part 112 of the guide system to the first guide part 111 of the guide system.

In some examples, the guide system 100 may be a telescopic guide system, and the second guide part 112 of the longitudinal rail may be movable relative to the first guide part 111 of the longitudinal rail along a longitudinal axis.

In such examples, the telescopic guide system may allow the second guide part 112 of the longitudinal rail to be in a retracted position or in an extended position. The retracted position may comprise a position in which the second guide part 112 of the longitudinal rail is located in an inner part of the nacelle. In its extended position, the second guide part 112 of the longitudinal rail may extend beyond the first end 17 of the nacelle through the opening 19.

A telescopic guide system may provide a guide system which may be permanently installed in the nacelle. The process of extraction and/or introduction of the transformer may be simplified since additional tools or equipment may not be necessary in order to prepare the guide system for moving the transformer e.g. from a first position inside of the nacelle to a second position outside of the nacelle.

During normal operation of the nacelle, the second guide part 112 of the longitudinal rail may be in a retracted position. When a transformer must be extracted from (or introduced into) the nacelle 16, a cover in the first end 17 of the nacelle may be open and/or removed forming an opening 19. Once the opening 19 may be formed, the second part 112 of the longitudinal rail may be moved to its extended position. In this example, the cart 130 may be configured to move along the second guide part 112 of the longitudinal rail once it is in its extended position.

In some examples, the telescopic guide system may be connected to electrical means. In other examples, the second guide part 112 of the longitudinal rail may be moved to its extended position or to its retracted position manually.

In further examples, the method may comprise (releasably) attaching the second guide part 112 to the first guide part 111. In some examples, the method may comprise hoisting the second guide part 112 towards the nacelle with a crane. Hoisting equipment e.g. a crane, may carry the second guide part 112 of the longitudinal rail and may position it adjacent to the first guide part 111 of the longitudinal rail through the opening 19 in the nacelle. Then, the first guide part 111 and the second guide part 112 may be attached together e.g. a specialized operator may attach both part together with bolts or other suitable fasteners. The second guide part 112 of the longitudinal rail does not need to be permanently arranged in the nacelle, and additional weight may be avoided.

In other examples, the second guide part 112 may be lifted by an internal crane of the nacelle.

Figure 6 schematically shows a nacelle 16 comprising a guide system 100 according to the example shown in figures 4 and 5. The second guide part 112 of the guide system extends through an opening in the nacelle and beyond a first end of the nacelle and carries a transformer 90.

In some examples, the transformer 90 may be a damaged transformer which is being extracted from the nacelle.

The method for extracting a transformer from the nacelle may further comprise picking the transformer 90 up with a crane after moving the transformer 90 outside of the nacelle 16.

In some examples, hoisting equipment (not shown) may be used to pick the damaged transformer 90 up from the second guide part 112 of the longitudinal rail. Hoisting equipment may be connected to the transformer 90 which may then be released from the cart 130.

In some examples, picking the transformer 90 up with a crane may comprise connecting hoisting equipment to the second guide part 112 of the guide system. The second guide part 112 may then be detached from the first guide part e.g. by a specialized operator and the transformer 90, the second guide part 112 and the cart 130 may all be picked up with the crane. The second guide part may comprise suitable locking elements or stoppers to retain the transformer in a fixed position relative to the second guide part. The extraction process may be safer, because the transformer may be picked up without a specialized operator having to access an outer part of the nacelle.

In other examples, hoisting equipment may be used to attach a transformer 90 e.g. a new transformer, to the cart 130 located in the second guide part 112 of the longitudinal rail. The cart 130 carrying the new transformer 90 may be moved along the second guide part 112 of longitudinal rail and the first guide part 111 of the longitudinal rail. In some examples, in a further step, the transformer 90 may be put down to its place in the nacelle e.g. through a hoist in the guide system. In other examples, both ends of the cart 130 may be resiliently connected to the longitudinal rail 110 to form a tuned mass damper.

In a further aspect of the present disclosure, a wind turbine 10 is provided. The wind turbine 10 comprises a tower 15, a nacelle 16 and one or more blades 22 rotatably supported from the nacelle 16 via a hub 20. The nacelle 16 comprises a transformer 90 and a guide system 100 configured to carry a cart 130. The guide system 100 comprises a first guide part 111 which is arranged inside of the nacelle and a second guide part 112. The second guide part 112 is configured to extend beyond a first end 17 of the nacelle through an opening 19, and the cart 130 is configured to carry the transformer 90.

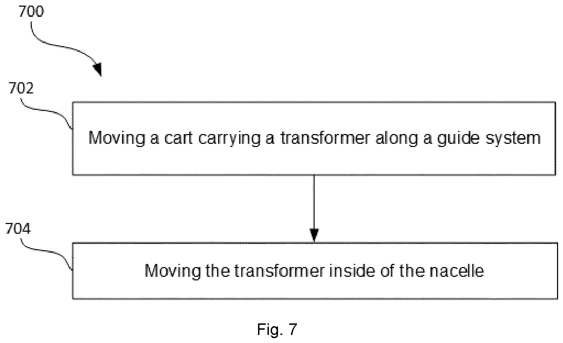

In yet a further aspect of the disclosure, a method 700 for introducing a transformer into a nacelle of a wind turbine is provided. Figure 7 shows a flow chart of the method 700.

The method comprises at step 702, moving a cart along a guide system, wherein the cart carries the transformer, and wherein the guide system comprises a first guide part arranged inside the nacelle, and a second guide part extending through an opening in the nacelle and beyond a first end of the nacelle. The method further comprises at step 704 moving the transformer along the first guide part to position the transformer inside of the nacelle.

Aspects and explanations with respect to method 300 may be combined and applied to method 700 in the reverse order.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method for extracting a transformer (90) from a nacelle (16) of a wind turbine, the method comprising:
moving a cart (130) along a guide system (100), wherein the cart (130) carries the transformer (90), and wherein
the guide system (100) comprises a first guide part (111) arranged inside the nacelle (16), and a second guide part (112) extending through an opening (19) in the nacelle and beyond a first end (17) of the nacelle, the method further comprising:
moving the transformer (90) along the second guide part (112) to position the transformer (90) outside of the nacelle (16).

2. The method of claim 1, further comprising connecting the transformer (90) to the cart (130) before moving the cart (130) along the guide system (100).

3. The method of claim 2, wherein connecting the transformer (90) to the cart (130) comprises suspending the transformer (90) from the cart (130).

4. The method of any of claims 1-3, wherein the first end (17) of the nacelle is the rear end of the nacelle.

5. The method of any of claims 1-4, comprising moving elements within the nacelle out of a trajectory of the transformer (90) within the nacelle.

6. The method of any of claims 1-5, wherein the guide system (100) is a telescopic guide system, wherein the second guide part (112) is movable relative to the first guide part (111) along a longitudinal axis.

7. The method of any of claims 1-6, comprising attaching the second guide part (112) to the first guide part (111).

8. The method of claim 7, comprising hoisting the second guide part (112) towards the nacelle (16) with a crane.

9. The method of any of claims 1-8, wherein the guide system (100) further comprises a hoist, and wherein the method comprises lifting the transformer (90) off a floor of the nacelle (16) with the hoist.

10. The method of any of claims 1-9, wherein the method further comprises picking the transformer (90) up with a crane after moving the transformer (90) outside of the nacelle (16), optionally wherein the crane is hoisted while attached to the second guide part.

11. A nacelle (16) of a wind turbine comprising:
a transformer (90); and
a guide system (100) configured to guide a cart (130), wherein
the guide system (100) comprises a first guide part (111) which is arranged inside of the nacelle (16) and a second guide part (112), wherein the second guide part (112) is configured to extend beyond a first end (17) of the nacelle through an opening (19), and wherein
the cart (130) is configured to carry the transformer (90).

12. The nacelle (16) of claim 11, wherein the guide system (100) comprises a longitudinal rail (110) and wherein the cart (130) comprises one or more rollers or sliding pads (120) configured to be displaced along the rail.

13. The nacelle (16) of claim 11 or 12, wherein both ends of the cart (130) are resiliently connected to the guide system (100) to form a tuned mass damper.

14. The nacelle (16) of any of claims 11 - 13, wherein the guide system (100) is a telescopic guide system, wherein the second guide part (112) is movable relative to the first guide part (111) of the longitudinal rail (110) along a longitudinal axis.

15. A wind turbine (10) comprising:
a tower (15);
a nacelle (16) according to any of claims 11 - 14; and
one or more blades (22) rotatably supported to the nacelle (16) via a hub (20).
